# EUROPEAN PATENT APPLICATION

(11) **EP 4 307 453 A1**
(43) Date of publication of application: **17.01.2024**
(21) Application number: 22878748.7
(22) Date of filing: 16.09.2022
(51) Int. Cl.: H01M 50/375, H01M 50/358, H01M 50/251, H01M 50/249, H01M 50/211

(54) **BATTERY PACK WITH IMPROVED SAFETY**

(30) Priority: 06.10.2021 KR 20210132742
(71) Applicant: LG Energy Solution, Ltd., Seoul 07335 (KR)
(72) Inventor: JO, Sang-Hyun, Daejeon 34122 (KR); KIM, Seung-Hyun, Daejeon 34122 (KR); OH, Young-Hoo, Daejeon 34122 (KR); OK, Seung-Min, Daejeon 34122 (KR); CHO, Young-Bum, Daejeon 34122 (KR); HONG, Sung-Goen, Daejeon 34122 (KR)
(74) Representative: Plasseraud IP
(86) International application number: PCT/KR2022/013868
(87) International publication number: WO 2023/058927

(57) **Abstract**

Disclosed is a battery pack configured to improve safety by effectively suppressing heat transfer between battery modules in the present disclosure. A battery pack according to one aspect of the present disclosure includes a plurality of battery modules each having one or more battery cells, configured to store and release energy, and stacked in at least one direction; a pack case provided on at least one side of the plurality of battery modules, covering at least a portion of the outside of the plurality of battery modules, and having one or more openings formed therein; and a melting member provided in the opening of the pack case to seal the opening and configured to open the opening by being melted by heat generated from one or more battery modules among the plurality of battery modules.

## Description

### TECHNICAL FIELD

The present application claims priority to Korean Patent Application No. 10-2021-0132742 filed on October 6, 2021, the disclosures of which are incorporated herein by reference.

The present disclosure relates to a battery, and more specifically, to a battery pack configured to improve safety in the case of an event such as thermal runaway and an energy storage system including the same, or the like.

### BACKGROUND ART

As the demand for portable electronic products such as smart phones, smart pads, and the like has rapidly increased in recent years and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydride batteries, nickel zinc batteries, lithium secondary batteries, and the like. In particular, lithium secondary batteries are in the spotlight because they have almost no memory effect compared to nickel-based secondary batteries and thus have advantages of free charge/discharge, very low self-discharge rate, and high energy density.

The secondary battery may be used alone, but in general, a plurality of secondary batteries are electrically connected to each other in series and/or in parallel in many cases. In particular, a plurality of secondary batteries may be accommodated in one module case in a state of being electrically connected to each other to constitute one battery module. Also, the battery module may be used alone, or two or more may be electrically connected to each other in series and/or in parallel to constitute a higher level device such as a battery pack, or the like. Here, the battery module and the battery pack may be used interchangeably.

Recently, as issues such as power shortage, eco-friendly energy, or the like have been highlighted, an energy storage system (ESS) for storing the generated power is attracting more attention. Typically, when the energy storage system is used, it is easy to construct a power management system such as a smart grid system, and thus power supply and demand may be easily controlled in a specific region or city. In addition, as the commercialization of electric vehicles is in full swing, such an energy storage system may be applied to electric charging stations capable of charging electric vehicles.

In the case of a battery pack used in such an energy storage system or the like, a plurality of battery modules may be accommodated in the inner space of the pack case. Also, each of the battery modules may be connected in series and/or in parallel to each other to increase the power or capacity of the battery pack. Moreover, in order to increase the energy density of the battery pack, the battery modules may exist in a densely packed state in a very narrow space.

However, in the configuration of the battery pack, when a thermal event such as thermal runaway occurs in a specific battery module, a large amount of heat may be generated and released from the corresponding battery module. In addition, the heat released in this way may be transferred to other neighboring battery modules, and the heat transfer may cause a problem in which a thermal runaway situation is propagated to other battery modules.

In particular, in the case of a conventional battery pack, a pack case is configured in the form of a box or a mono frame (tube), and a plurality of battery modules are configured to be accommodated in an inner space of the pack case in many cases. However, in such a conventional battery pack configuration, the pack case may cause a problem of increasing heat transfer between battery modules. That is, heat generated from an event module, which is a battery module where a thermal event occurs, may be directly transferred to an adjacent battery module through thermal radiation or the like, or may also be transferred through a pack case in a heat conduction method. In particular, when passing through the pack case, a problem of transferring heat to a battery module that is not adjacent to the event module and is far away may occur.

Therefore, according to the configuration of the conventional battery pack, there is a problem in that heat is easily transferred between a plurality of battery modules included in the pack case and thus thermal runaway propagation is not properly suppressed. In addition, such thermal runaway propagation may cause not only failure or damage of the battery pack but also ignition or spread of fire, thereby causing great damage.

### DISCLOSURE

### Technical Problem

The present disclosure is designed to solve the problems of the related art, and therefore the present disclosure is directed to providing a battery pack configured to improve safety by effectively suppressing heat transfer between battery modules and an application device including the same, or the like.

However, technical problems to be solved by the present disclosure are not limited to the above-described problems, and other problems not mentioned herein may be clearly understood by those skilled in the art from the following description of the present disclosure.

### Technical Solution

In one aspect of the present disclosure, there is provided a battery pack including a plurality of battery modules each having one or more battery cells, configured to store and release energy, and stacked in at least one direction; a pack case provided on at least one side of the plurality of battery modules, covering at least a portion of the outside of the plurality of battery modules, and having one or more openings formed therein; and a melting member provided in the opening of the pack case to seal the opening and configured to open the opening by being melted by heat generated from one or more battery modules among the plurality of battery modules.

Here, the pack case may be configured to guide the generated gas when gas is generated from one or more battery modules among the plurality of battery modules, and the melting member may be configured to be melted by the generated gas.

In addition, the plurality of battery modules may be configured to be disposed side by side in the left-right direction to discharge venting gas forward or backward, and the pack case may be disposed on at least one of the front and rear of the plurality of battery modules.

In addition, the pack case may include a body portion located at the front or rear of the plurality of battery modules and a bent portion formed in a shape in which upper and lower ends of the body portion are bent.

In addition, the opening may be formed in both the body portion and the bent portion.

In addition, the opening may be configured to be elongated in a direction orthogonal to the stacking direction of the plurality of battery modules.

In addition, the opening may be formed so that at least a portion thereof is located between the plurality of battery modules.

In addition, the pack case may be located on at least one side of the front and rear of the plurality of battery modules, and the plurality of battery modules may be configured such that at least a portion thereof is spaced apart from each other by a predetermined distance and the spaced portion is exposed in at least one direction of upper and lower portions.

In another aspect of the present disclosure, there is provided an energy storage system including the battery pack according to the present disclosure.

In still another aspect of the present disclosure, there is provided a vehicle including the battery pack according to the present disclosure.

### Advantageous Effects

According to the present disclosure, it is possible to suppress heat propagation between battery modules in a battery pack including a plurality of battery modules.

In particular, when heat is generated in a specific battery module due to an event such as thermal runaway, the generated heat may be effectively prevented from being transferred to other modules through the pack case.

Moreover, according to an embodiment of the present disclosure, heat may be continuously generated after the gas is vented in the event module, but transfer of the generated heat may be reduced.

Therefore, according to this aspect of the present disclosure, the thermal safety of the battery pack may be further improved.

Moreover, according to an implementation configuration of the present disclosure, the effect of blocking heat transfer between modules may be improved while securing the duct function or structural stability of the pack case.

In addition, according to various embodiments of the present disclosure, several other additional effects may be achieved. The various effects of the present disclosure will be described in detail in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically illustrating the configuration of a battery pack according to an embodiment of the present disclosure.
FIG. 2 is an exploded perspective view of some components of FIG. 1.
FIG. 3 is a perspective view illustrating one battery module included in a battery pack according to an embodiment of the present disclosure.
FIG. 4 is a partial perspective view illustrating a form in which some components of FIG. 3 are separated or removed.
FIG. 5 is a cross-sectional view illustrating the configuration of a battery pack as viewed from above according to an embodiment of the present disclosure.
FIGS. 6 and 7 are views illustrating some configurations of a battery pack as viewed from the front according to an embodiment of the present disclosure, and show configurations before and after an event occurs, respectively.
FIG. 8 is a perspective view illustrating the configuration of a portion of a pack case in a battery pack according to an embodiment of the present disclosure.
FIG. 9 is a view illustrating the configuration in a form in which the upper and lower bent portions are unfolded for the pack case shown in FIG. 8.
FIG. 10 is a front view schematically illustrating some configurations of a pack case according to an embodiment of the present disclosure.
FIG. 11 is a cross-sectional view illustrating some configurations of a battery pack as viewed from the front according to an embodiment of the present disclosure.
FIG. 12 is a development view schematically illustrating the configuration of a portion of a pack case according to another embodiment of the present disclosure.
FIG. 13 is a cross-sectional view schematically illustrating some configurations of a pack case according to still another embodiment of the present disclosure.
FIG. 14 is a cross-sectional view schematically illustrating some configurations of a pack case according to still another embodiment of the present disclosure.
FIG. 15 is a cross-sectional view schematically illustrating some configurations of a pack case according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

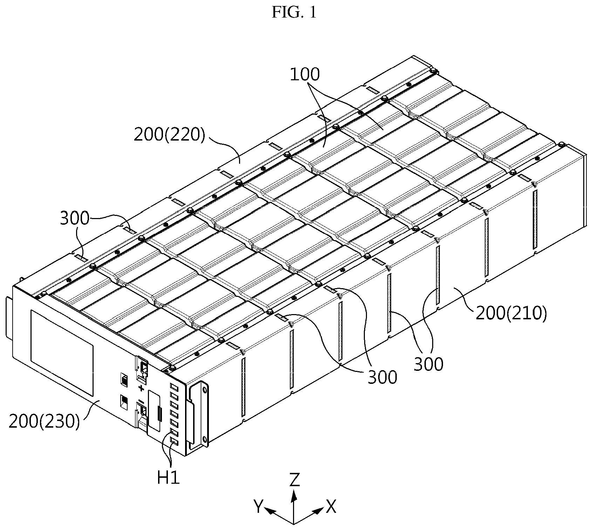

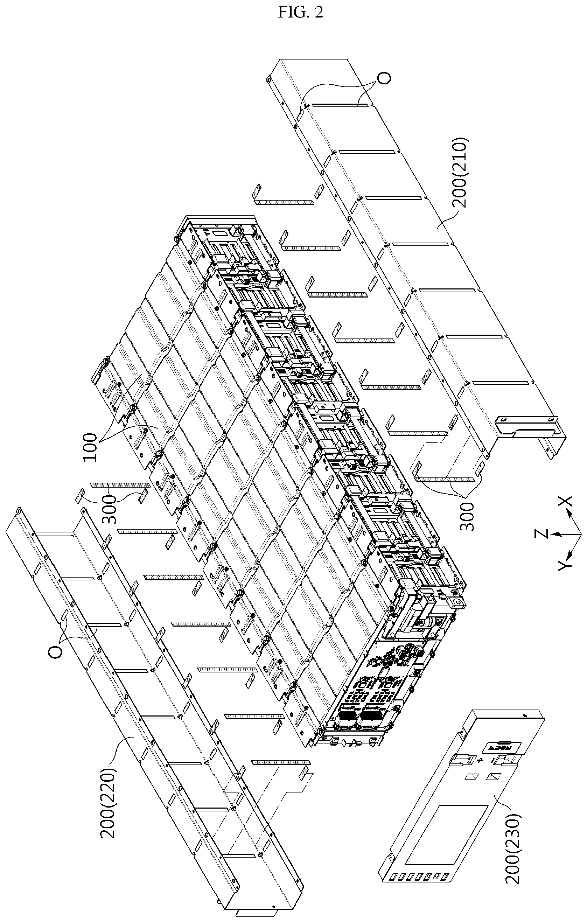

FIG. 1 is a perspective view schematically illustrating the configuration of a battery pack according to an embodiment of the present disclosure, and FIG. 2 is an exploded perspective view of some components of FIG. 1.

Referring to FIGS. 1 and 2, the battery pack according to the present disclosure includes a battery module 100, a pack case 200, and a melting member 300.

The battery module 100 may include at least one battery cell to store and release energy. Here, each battery cell may mean a secondary battery. In addition, the battery module 100 may be included in the battery pack in plurality. In particular, in order to improve the capacity and/or output of the battery pack, a plurality of battery modules 100 may be included in the battery pack as shown in FIGS. 1 and 2. In this case, the plurality of battery modules 100 may be stacked in at least one direction. As an example, FIGS. 1 and 2 show a form in which eight battery modules 100 are disposed in the X-axis direction (left-right direction).

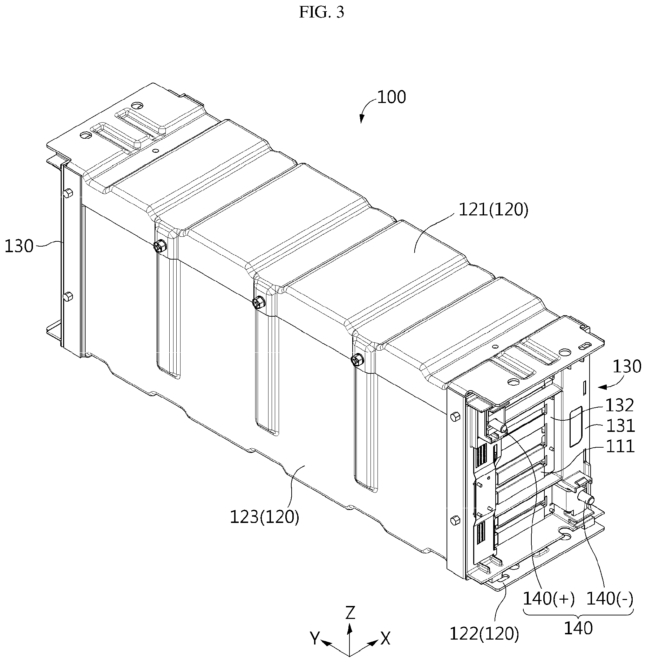

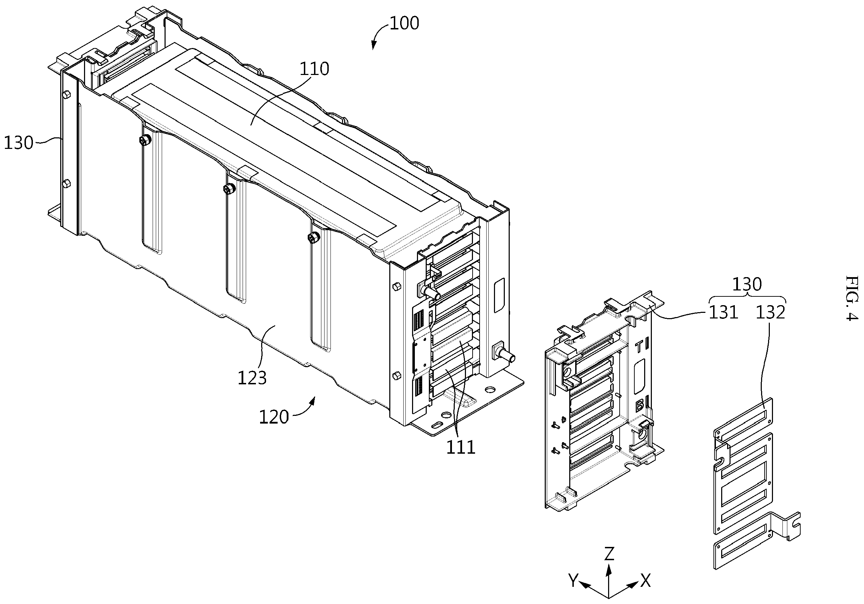

An example of a more specific configuration of the battery module 100 is shown in more detail in FIGS. 3 and 4.

FIG. 3 is a perspective view illustrating one battery module included in a battery pack according to an embodiment of the present disclosure. Also, FIG. 4 is a partial perspective view illustrating a form in which some components of FIG. 3 are separated or removed.

Referring to FIGS. 3 and 4, the battery module 100 may include a battery cell 110 (secondary battery).

Here, the battery cell 110 may include an electrode assembly, an electrolytic solution (electrolyte), and a battery case. Although a pouch-type secondary battery is shown in FIGS. 3 and 4, other types of secondary batteries, such as cylindrical batteries or prismatic batteries, may be included in the battery module 100.

The secondary battery may be included in plurality. For example, as shown in the drawings, a cell assembly may be configured in a form where a plurality of pouch-type secondary batteries are stacked in the upper and lower direction in a state of being laid down. At this time, an electrode lead 111 of each battery may be in direct contact with each other or electrically connected through a bus bar or the like.

In addition, the battery module 100 may include a module terminal 140. For example, in the battery module 100, the electrode lead 111 of each battery cell 110 may be located on a front and/or rear side, and the module terminal 140 may be located to be electrically connected to the electrode lead 111. In particular, the module terminal 140 may be located on the front and/or rear side of the battery module 100 and configured to protrude forward and/or backward. Moreover, each battery module 100 may include a positive electrode module terminal 140 (+) and a negative electrode module terminal 140 (-) as the module terminals 140. At this time, the positive electrode module terminal 140 (+) and the negative electrode module terminal 140 (-) may be located on the same side of the battery module 100, for example on the front (-Y-axis direction) side as shown in the drawings. The module terminal 140 may allow the secondary battery (battery cell 110) included in the battery module 100 to be electrically connected to other components outside the battery module 100, such as another battery module 100.

The pack case 200 may be provided on at least one side of the plurality of battery modules 100. Also, the pack case 200 may be configured to cover at least a portion of the outer side of the battery module 100. Moreover, the pack case 200 may be configured to define an inner space and accommodate a plurality of battery modules 100 in the inner space. That is, the pack case 200 may be configured to surround at least a portion of the outer side of the battery module 100 stack.

For example, the pack case 200 may include a front case 210, a rear case 220, and a side case 230, as shown in FIGS. 1 and 2. In this case, the pack case 200 may be located at the front end, rear end, and left side of the battery module 100 stack to cover the corresponding portion of the battery module 100 stack.

A pack terminal may be provided on at least one side of the pack case 200. The pack terminal may function as a terminal capable of exchanging power with an external charging or discharging device with respect to the battery pack.

In particular, in the present disclosure, the pack case 200 may have one or more openings as indicated by O in FIG. 2. This opening O may be configured in a form of penetrating the pack case 200. That is, the opening O may be configured in a form of penetrating between the inside and outside of the pack case 200. Moreover, a plurality of openings O may be formed in the pack case 200. For example, referring to FIG. 2, a plurality of openings O may be formed in each of the front case 210 and the rear case 220.

This opening O may be formed in a hole shape penetrating the central portion of the pack case 200 or in a shape cut from an end of the pack case 200 to a predetermined point.

The melting member 300 may be provided in the opening O formed in the pack case 200 to seal the opening O. At this time, the melting member 300 may be coupled to the pack case 200 in various ways. For example, the melting member 300 may be coupled and fixed to the pack case 200 in the form of being inserted into and fastened to the opening O formed in the pack case 200 or a groove formed separately. Alternatively, the melting member 300 may be coupled to the pack case 200 by various other fastening methods such as adhesive, thermal fusion, welding, bolting, or the like. Also, the melting member 300 may be coupled to the pack case 200 to block a portion or the entire opening O. That is, the melting member 300 may be coupled to the opening O so that the inside of the pack case 200 is not exposed to the outside through the opening O.

In particular, the melting member 300 may be configured to be melted by heat to open the opening O. Moreover, when an event such as thermal runaway occurs in one or more battery modules 100 of the plurality of battery modules 100 included in the battery pack, heat may be generated. Such heat may be formed from heat generated from the battery module 100 side, but may be formed from venting gas or flame discharged from the battery module 100 side. When heat is generated from any battery module 100, the melting member 300 may be configured to be melted by such heat. To this end, the melting member 300 may be formed of a shape or material that is melted by heat generated from the battery module 100. Moreover, the melting member 300 may be made of a material having a melting point lower than that of the pack case 200. For example, the pack case 200, particularly, the front case 210 and the rear case 220 of FIG. 2 may be made of a steel material, and the melting member 300 may be made of a plastic material. Since the plastic material may have a melting point lower than that of a steel material, the melting member 300 may be melted even if the pack case 200 is not melted by heat generated from the battery module 100.

The melting member 300 may be melted by heat generated from the battery module 100 and may be configured to open the opening O by such melting.

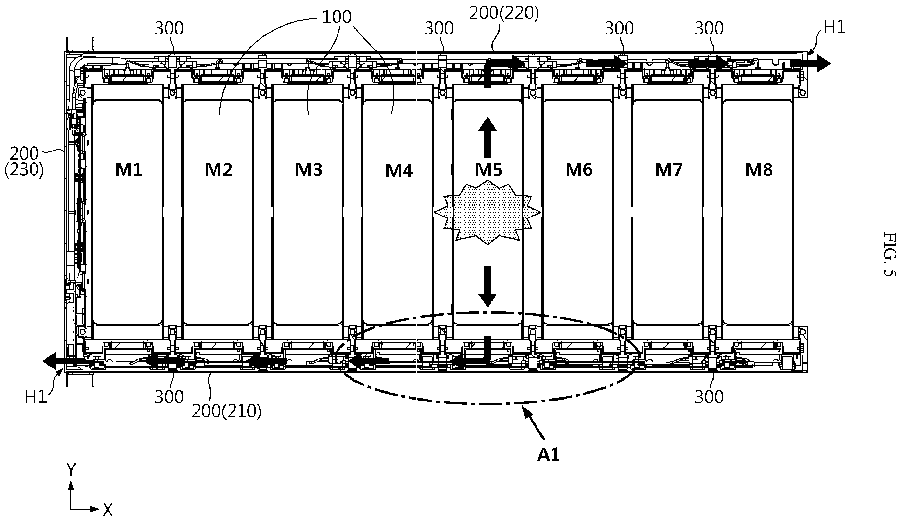

This will be described in more detail with reference to FIGS. 5 to 7.

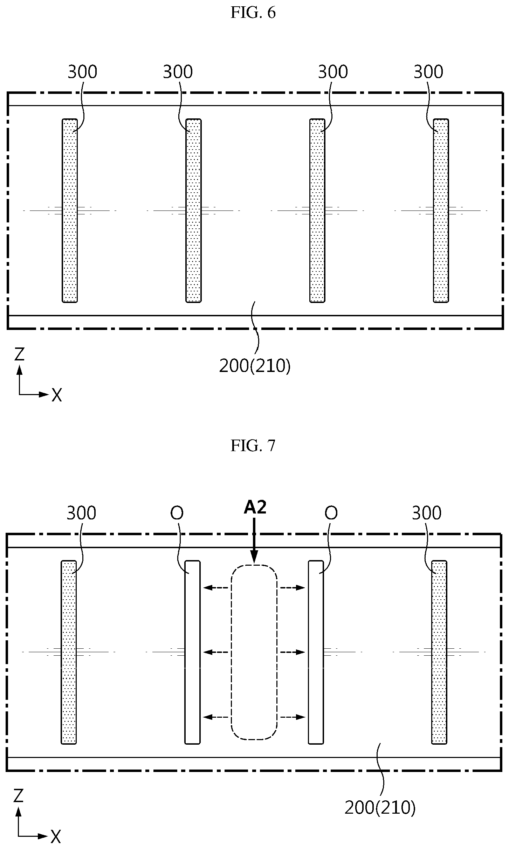

FIG. 5 is a cross-sectional view illustrating the configuration of a battery pack as viewed from above according to an embodiment of the present disclosure. FIGS. 6 and 7 are views illustrating some configurations of a battery pack as viewed from the front according to an embodiment of the present disclosure, and show configurations before and after an event occurs, respectively. For example, FIGS. 6 and 7 may be views illustrating a portion A1 of FIG. 5 as viewed from the front. More specifically, FIG. 6 shows the configuration before the melting member 300 is melted, and FIG. 7 shows the configuration after the melting member 300 is melted.

First, referring to FIG. 5, when a thermal runaway event occurs in any one battery module 100 (M5) of the plurality of battery modules 100 (M1 to M8) included in the battery pack, heat may be transferred from the corresponding battery module 100 (M5) to the pack case 200 side as indicated by an arrow.

In this case, as shown in FIG. 6, a plurality of melting members 300 may exist on the side of the pack case 200. At this time, when heat is generated and transferred from any one battery module 100 (M5) as indicated by A2 in FIG. 7, at least some of the melting members 300 may be melted by heat transferred from the battery module 100 (M5). Therefore, as shown in FIG. 7, at least some of the plurality of melting members 300 are melted, and the molten melting members 300 may be separated from the opening O. Therefore, the melting member 300 may open at least some of the openings O without blocking them any more.

According to this implementation configuration, when heat is abnormally generated from a specific battery module 100, some openings O of the pack case 200 may be opened, thereby effectively blocking heat transfer between the battery modules 100. In particular, when abnormal heat is generated from the module M5 in the embodiment of FIG. 5, the generated heat may be supposed to move in the left or right direction, which is the stacking direction of the battery module 100 along the pack case 200, as indicated by arrows in FIG. 7. At this time, the melting member 300 is melted by heat discharged from the module M5, so that the opening O of the pack case 200 may be exposed as shown in FIG. 7. Then, since heat transfer in a horizontal direction (X-axis direction in FIG. 7) is blocked by the opening O, heat transfer to other battery modules 100 may be suppressed.

For example, in the implementation configuration of FIG. 5, when heat is generated from module M5, transfer of the generated heat to other adjacent modules, such as module M4 and module M6, may be effectively suppressed. In addition, heat may be prevented from being transferred to another non-adjacent battery module 100, for example, module M3 or M7 by heat conduction method through the pack case 200. Moreover, when some of the openings O are exposed as shown in FIG. 7, air may flow in and out of the corresponding openings O or exist therein. Therefore, the thermal insulation effect by the openings O may be further increased.

Moreover, when the thermal conductivity of the melting member 300 is lower than that of the pack case 200, heat transfer in the horizontal direction by the pack case 200 may be suppressed even before the melting member 300 is melted.

The pack case 200 may be configured to guide gas when gas is generated from one or more battery modules 100 of the plurality of battery modules 100 included in the battery pack. In particular, the pack case 200 may allow the venting gas to flow along the inner surface, thereby guiding the discharge direction of the gas. In this case, it can be said that at least a portion of the pack case 200 functions as a duct in the battery pack. Also, in the pack case 200, an outlet H1 may be formed on at least one side thereof so that the venting gas may be discharged to the outside.

In this configuration, the melting member 300 may be configured to be melted by the venting gas discharged from the battery module 100. That is, the venting gas discharged from the battery module 100 may have a high temperature. Moreover, the venting gas discharged from the battery module 100 may include flames, sparks, high-temperature electrodes, active material particles, and the like. Therefore, the melting member 300 may be melted by being in contact with or adjacent to such a high-temperature venting gas.

In particular, as shown in FIGS. 2 and 5, the plurality of battery modules 100 included in the battery pack may be disposed side by side in the left and right directions. Also, as shown in FIG. 5, each battery module 100 may be configured to discharge the venting gas forward or backward.

In particular, the battery module 100 may include a module case 120 and a bus bar assembly 130 as shown in FIGS. 3 and 4.

Here, the module case 120 may be configured to accommodate at least one secondary battery in the inner space. For example, the module case 120 may include an upper plate 121, a lower plate 122, and a side plate 123 as shown in the drawing. In addition, the plurality of plates may be coupled to each other to accommodate the battery assembly in a limited inner space.

Here, some of the plates included in the module case 120, such as the lower plate 122 and the side plate 123 (the left plate, the right plate), may be integrated with each other. In this case, the integrated shape of the lower plate 122 and the side plate 123 may be approximately U-shaped. Alternatively, the lower plate 122, the side plate 123, and the upper plate 121 may be configured in the form of tubular mono frames integrated with each other. Each plate of the module case 120 may define an inner space in a coupled state. In addition, the cell assembly may be accommodated in the inner space.

The module case 120 may be configured such that at least one side is open. In addition, the electrode lead 111 of the cell assembly may be located in the open portion.

In particular, the battery module 100 may include a bus bar assembly 130 to be coupled to the open portion of the module case 120. For example, as shown in FIGS. 3 and 4, the bus bar assembly 130 may be coupled to the open portion of the front and rear sides of the module case 120. The electrode lead 111 of the battery assembly may be located in the front and rear sides of the module case 120. In addition, the bus bar assembly 130 may be coupled to the electrode lead 111. As a more specific example, the bus bar assembly 130 may include a bus bar housing 131 and a module bus bar 132 as shown in FIGS. 3 and 4.

Here, the bus bar housing 131 may be made of an electrically insulating material, such as a plastic material. In addition, the bus bar housing 131 may be configured such that the module bus bar 132 is seated and fixed thereon. Also, the module bus bar 132 may be made of an electrically conductive material, such as a metal material. In addition, the module bus bar 132 may electrically connect at least two electrode leads 111 or may be connected to at least one electrode lead 111 to transmit sensing information to a control unit such as a battery management system (BMS).

In this way, the battery module 100 included in the battery pack according to the present disclosure may be configured such that only some specific portions, for example the front and rear sides where the bus bar assembly 130 is located, are opened and the other portions may be sealed. In this case, when a venting gas or the like is generated inside the battery module 100, the venting gas or the like may be induced to be discharged only to the open portions of the module case 120, for example the front and rear sides where the bus bar assembly 130 is located. In particular, a slit may be formed in the bus bar assembly 130 so that the electrode lead 111 may pass therethrough. At this time, the venting gas (including sparks, flames, and the like) inside the battery module may be discharged to the outside of the module case 120 toward the front and rear sides of the module case 120 through the slit of the bus bar assembly 130, as shown in FIG. 5.

In this configuration, the pack case 200 may be disposed on at least one of the front and rear sides of the plurality of battery modules 100. For example, as shown in FIGS. 2 and 5, the front case 210 and the rear case 220 as the pack case 200 may be disposed on the front and rear sides of the eight battery modules 100, respectively, to function as front and rear side ducts.

According to this implementation configuration of the present disclosure, when a venting gas is generated in any battery module 100 of the plurality of battery modules 100, the venting gas may be guided toward the outlet H1 by the front case 210 and/or the rear case 220 for at least a predetermined time. In addition, after the venting gas is discharged to a certain extent, the amount of venting gas may be gradually reduced. Also, in the process of discharging the venting gas, at least a portion of the melting member 300 may be melted due to heat of the venting gas, and thus, as shown in FIG. 7, at least some of the openings O of the pack case 200 may be opened. In addition, after the opening O of the pack case 200 is opened, heat conduction through the pack case 200, particularly the duct, may be suppressed by the opening O. Therefore, thermal runaway propagation between the battery modules 100 due to heat conduction through the pack case 200, particularly the pack case 200 functioning as a duct, may be prevented more effectively.

Meanwhile, when the pack case 200, for example, the front case 210 and the rear case 220 function as ducts, the pack case 200 may be configured to maintain the duct function for a certain period of time at an initial stage where a thermal event occurs in a specific battery module 100. To this end, the melting member 300 may be formed of a material or shape capable of being maintained for a predetermined time without melting immediately when the venting gas is discharged. For example, when the front case 210 and the rear case 220 are made of a steel material, the melting member 300 may be made of a heat-resistant plastic material, which has a melting point lower than that of the material of the pack case 200 but has a melting point higher than a certain temperature. Here, as the heat-resistant plastic, various plastic materials known at the time of filing of the present disclosure may be used. For example, as the melting member 300 of the present disclosure, various types of heat-resistant plastics such as silicone-based, fluorine-based, and phenolic resin-based plastics may be used. More specifically, the melting member 300 is a plastic material maintaining mechanical strength in air and under a temperature condition of 300 to 600 °C, and may contain substances such as aromatic polyamide, polyimide, polysulfone, polybenzoimidazole, polyphenylene oxide, and the like.

According to this implementation configuration of the present disclosure, at an initial stage where the venting gas is discharged, the melting member 300 closes the opening O of the pack case 200, thereby maintaining the duct function of the pack case 200 as it is. However, when the discharge of the venting gas decreases below a certain level or disappears after a predetermined period of time, the need to maintain the duct function of the pack case 200 may be reduced. At this time, when the melting member 300 is melted and the opening O of the pack case 200 is exposed, heat conduction through the pack case 200 may be suppressed by the opening O.

However, the material or characteristics of the melting member 300, particularly the melting point of the melting member 300, may be variously selected depending on the type, structure, performance, and the like of the battery cell 110, the battery module 100, or the battery pack. For example, the material of the melting member 300 may be selected in consideration of the rising temperature due to the venting gas and the venting gas discharge time during thermal runaway of the corresponding battery pack. As a more specific example, the melting member 300 may be formed of a heat-resistant plastic material capable of being melted after the venting gas discharge time during thermal runaway of the battery pack.

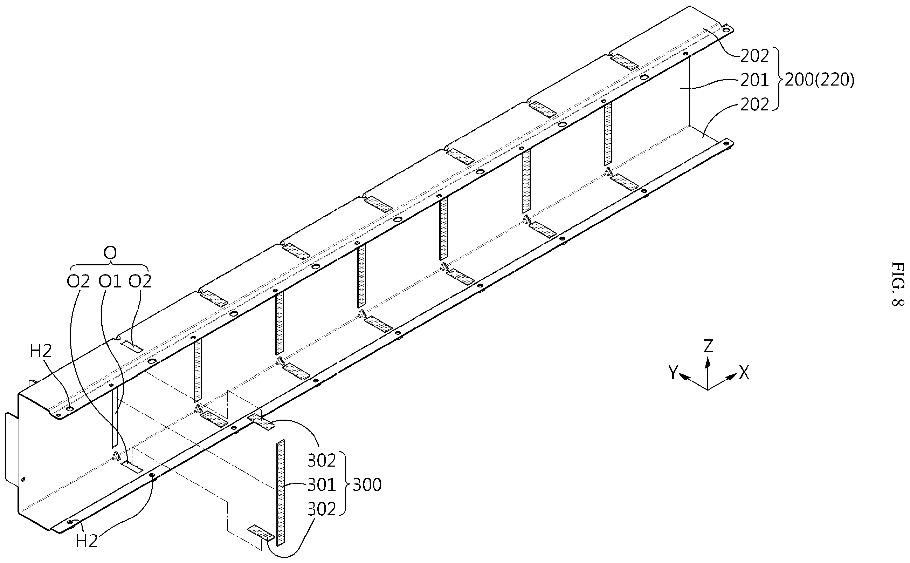

The pack case 200 may be configured in a form in which an upper end and a lower end are bent. This will be described in more detail with reference to FIG. 8.

FIG. 8 is a perspective view illustrating the configuration of a portion of a pack case in a battery pack according to an embodiment of the present disclosure. In particular, FIG. 8 may be referred to as an enlarged view illustrating the configuration of the rear case 220 in the battery pack shown in FIGS. 1 and 2. However, for convenience of description in FIG. 8, a certain melting member 300 is shown in a form separated from the corresponding opening O of the pack case 200.

Referring to FIG. 8, the pack case 200, particularly the front case 210 and the rear case 220, may include a body portion 201 and a bent portion 202. Here, the body portion 201 may be located in front or rear of the plurality of battery modules 100. For example, as shown in FIG. 8, the body portion 201 of the rear case 220 may be located on the rear side of the eight battery modules 100 in a vertically erected form. That is, the body portion 201 of the rear case 220 may be configured to face the rear side of each battery module 100, for example, the bus bar assembly 130 at the rear side of each battery module 100. As another example, the body portion 201 of the front case 210 may be located in a form of being erected in a vertical direction and facing the front side of each battery module 100. In particular, since the venting gas may be discharged to the front and rear sides of the battery module 100, it can be said that the surface of the body portion 201 is disposed in a direction orthogonal to the direction in which the venting gas is discharged.

In addition, the bent portion 202 may be configured in a form of being bent at the upper and lower ends of the body portion 201. In particular, the bent portion 202 may be configured to be bent inwardly where the battery module 100 is located at the upper and lower ends of the body portion 201. Also, the bent portion 202 may be configured to surround upper and lower portions of the front or rear ends of the plurality of battery modules 100.

Both the body portion 201 and the bent portion 202 may be configured in a plate shape. In particular, the body portion 201 and the bent portion 202 may be configured in an integrated form as one plate. In this case, the body portion 201 and the bent portion 202 may be configured such that the upper and lower ends of one plate are bent in the same direction, that is, in a direction in which the battery module 100 is located.

In this implementation configuration, a portion of the bent portion 202 may be coupled and fixed to a front end or a rear end of the battery module 100. For example, a fastening hole may be formed at an end side of the bent portion 202, as indicated by H2 in FIG. 8. In addition, it may be bolted to the plurality of battery modules 100 through the fastening hole H2. The fastening configuration of the bent portion 202 and the battery module 100 may be implemented in various other fastening methods.

In the case of this implementation configuration of the present disclosure, the configuration of the pack case 200 is simple, and the pack case 200 and the battery module 100 may be easily assembled. In addition, according to this configuration, the duct function by the pack case 200 may be easily implemented. That is, when a separation space is formed between the body portion 201 of the pack case 200 and the front or rear end of the battery module 100, the venting gas may flow into the separation space.

In this configuration of the pack case 200, the opening O may be formed in both the body portion 201 and the bent portion 202. For example, referring to the configuration of the rear case 220 shown in FIG. 8, the opening O may be formed in all of the body portion 201, the upper bent portion 202, and the lower bent portion 202. That is, the opening O may include a first opening O1 formed in the body portion 201 and a second opening O2 formed in the bent portion 202. Moreover, the first opening O1 and the second opening O2 may be formed in the shape of a hole in the body portion 201 and the bent portion 202, respectively. Here, the first opening O1 and the second opening O2 may not be connected to each other and may be formed to be spaced apart from each other by a predetermined distance. For example, the first opening O1 may be formed to penetrate a central portion of the body portion 201 excluding a portion of the upper end and a portion of the lower end thereof, and the second opening O2 may be formed to penetrate a central portion of the bent portion 202 excluding a portion of the front end and a portion of the rear end thereof.

In addition, the melting member 300 may be coupled to each of these openings O. That is, in this configuration, the melting member 300 may include a first member 301 coupled to the first opening O1 and a second member 302 coupled to the second opening O2.

According to this implementation configuration of the present disclosure, while the structural stability of the pack case 200 is secured at a certain level or higher, when the melting member 300 is melted to expose the opening O of the pack case 200, the effect of suppressing heat conduction through the opening O may be further enhanced. Moreover, since the openings O are formed from the top to the bottom of the pack case 200, heat transfer in the stacking direction of the battery module 100, that is, in the left-right direction, may be effectively restricted.

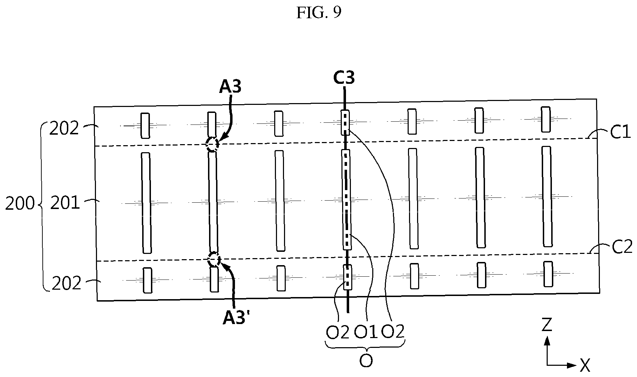

In particular, in the above implementation configuration, the first opening O1 and the second opening O2 may be formed in a straight line shape. This will be described in more detail with reference to FIG. 9. FIG. 9 is a view illustrating the configuration in a form in which the upper and lower bent portions are unfolded for the pack case shown in FIG. 8. That is, FIG. 9 may be regarded as a development view of the configuration of FIG. 8. However, in FIG. 9, the melting member 300 is excluded for convenience of illustration. In FIG. 9, when bent by approximately 90° around the dotted lines C1 and C2, respectively, the pack case 200 may be provided with the configuration as shown in FIG. 8.

Referring to FIG. 9, one first opening O1 formed in the body portion 201 and two second openings O2 formed in the upper bent portion 202 and the lower bent portion 202 may be arranged in the form of a straight line with each other. That is, as shown in the exemplary configuration of FIG. 9, the three openings O1, O2 may be disposed on one straight line so that the central portion may be arranged on the straight line C3. Moreover, in the exemplary configuration of FIG. 9, each of the eight first openings O1 may be disposed to be in a straight line with one second opening O2 formed on the upper bent portion 202 and the other second opening O2 formed on the lower bent portion 202.

According to this implementation configuration of the present disclosure, it is possible to reduce the path through which heat is transferred through the pack case 200. For example, referring to the configuration of FIG. 9, the path through which heat may be transferred in the horizontal direction (X-axis direction) through the pack case 200 in the embodiment may be referred to as a space between the first opening O1 and the second opening O2, as indicated by A3 and A3'. In the above embodiment, since the distance between the first opening O1 and the second opening O2 is short, the path through which heat may be transferred in the stacking direction (X-axis direction) of the battery module 100 may be reduced. Therefore, heat transfer between the battery modules 100 through the pack case 200 may be more effectively suppressed.

In addition, at least some of the openings O may be configured to be elongated in one direction. For example, referring to FIG. 9, the first opening O1 may be configured to be elongated in the vertical direction (Z-axis direction). In this case, since the stacking direction of the plurality of battery modules 100 may be referred to as the X-axis direction, the Z-axis direction may be referred to as a direction orthogonal to the stacking direction of the battery modules 100. Therefore, the first opening O1 may be said to have a shape being elongated in a direction orthogonal to the stacking direction of the battery module 100.

Moreover, referring to FIG. 9, second openings O2 may be formed at upper and lower ends of the first opening O1, respectively. Therefore, it can be said that the first opening O1 has a shape being elongated in a direction in which the second opening O2 is located.

According to this configuration of the present disclosure, with respect to the pack case 200, heat transfer suppression performance in the stacking direction of the battery module 100 may be secured without increasing the area of the opening O. That is, according to the above configuration, the opening O may block heat conduction in a horizontal direction through the pack case 200. In addition, in the above embodiment, a plurality of openings O may be disposed in a horizontal direction, and a horizontal separation distance between the openings O may be secured at a predetermined level or longer. Therefore, mechanical stability of the pack case 200 may be secured. In particular, the melting member 300 may be coupled to the opening O, and the thermal and mechanical stability of the melting member 300 may be inferior to that of the pack case 200. According to the above embodiment, the area of the pack case 200 is largely secured, so that mechanical stability by the pack case 200 may be ensured in a normal state and additionally, the pack case 200 may withstand high temperature and high pressure of the venting gas well even in an emergency situation where the venting gas is discharged. Therefore, a problem in which the structural stability of the pack case 200 is impaired, particularly, a problem in which the pack case 200 collapses in an emergency situation, and the like may be prevented.

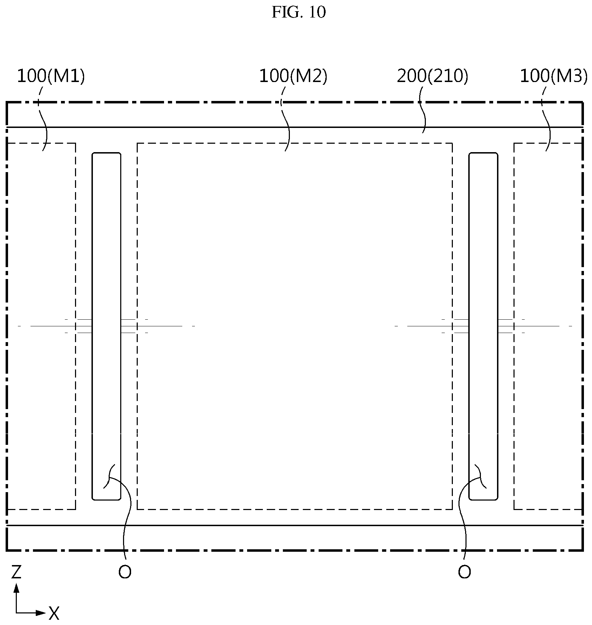

At least some of the openings O may be formed to be positioned between the plurality of battery modules 100. This will be described in more detail with reference to FIG. 10.

FIG. 10 is a front view schematically illustrating some configurations of a pack case according to an embodiment of the present disclosure. For example, FIG. 10 may be referred to as a view illustrating a partial configuration of a form in which the front case 210 is viewed from the outside of the battery pack in the configuration of the battery pack of FIG. 2. However, for convenience of description, the battery module 100 located inside the pack case 200 is shown in a dotted line.

Referring to FIG. 10, an opening O is formed in the pack case 200. In this case, the openings O may be formed in a form in which at least some are located between each of the battery modules 100 (M1, M2, M3). That is, the opening O located on the left side in FIG. 10 may extend in the vertical direction (Z-axis direction) and may be located between the M1 module and the M2 module in the horizontal direction (X-axis direction). In addition, the opening O located on the right side in FIG. 10 may be located between the M2 module and the M3 module in the horizontal direction (X-axis direction). In particular, the opening O may have the center line in a horizontal direction located between each battery module 100.

According to this configuration of the present disclosure, heat transfer suppression performance between modules through the opening O may be reliably implemented. In addition, in this case, it is possible to prevent the melting member 300 from being removed too quickly by the venting gas discharged to the front or rear side of the battery module 100. That is, when venting gas is discharged from the battery module 100, the venting gas may be discharged toward the front or rear side of the battery module 100 as shown in FIG. 5. At this time, when the opening O directly faces the venting gas discharge portion of the battery module 100, the melting member 300 provided in the opening O may be separated from the opening O or eliminated faster than intended due to the high pressure of the venting gas. If the opening O is opened too quickly, the venting gas is discharged through the opening O, and thus a venting gas induction function, that is, a duct function, by the pack case 200 may not be properly implemented. However, as in the above embodiment, when the opening O is located in a portion between the battery modules 100 in the X-axis direction rather than in a portion directly facing the front or rear side of the battery module 100, the venting gas discharged from the battery module 100 may not be directly directed toward the opening O. Therefore, since the melting member 300 may be maintained for a certain period of time or longer until the venting gas is discharged to the outside through the pack case 200, a problem in which the duct function of the pack case 200 is not properly implemented may be prevented.

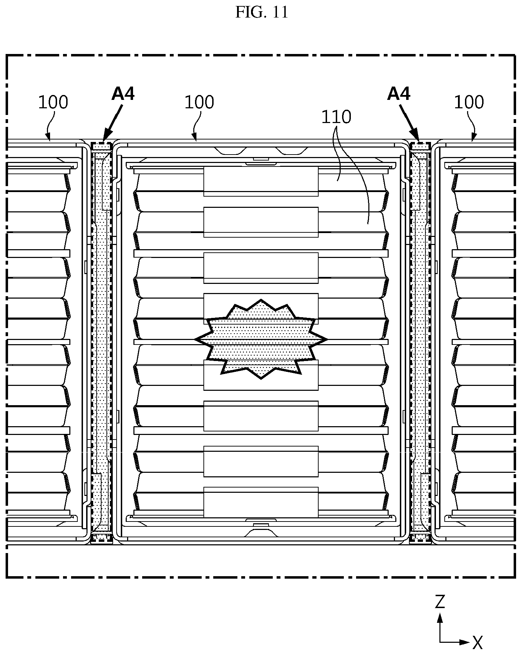

In addition, as shown in FIGS. 1 and 2, the pack case 200 may be located on at least one side of the front and rear of the plurality of battery modules 100 stacked in the left-right direction. Also, at least a portion of the plurality of battery modules 100 may be configured to be spaced apart from each other by a predetermined distance. This will be described in more detail with further reference to FIG. 11.

FIG. 11 is a cross-sectional view illustrating some configurations of a battery pack as viewed from the front according to an embodiment of the present disclosure.

Referring to FIG. 11, a plurality of battery modules 100 may be stacked in a horizontal direction (X-axis direction), and each battery module 100 may be spaced apart from each other by a predetermined distance in the stacking direction. That is, as indicated by A4 in FIG. 11, a predetermined space may be formed between the plurality of battery modules 100. Also, air may exist in this space. In particular, the plurality of battery modules 100 may be configured such that the spaced portions are exposed in an upward and/or downward direction. In this case, air outside the battery pack may flow in and out of the space between the battery modules 100.

Moreover, referring further to FIGS. 1 and 2, a front case 210 and a rear case 220 may be located at the front and rear of the battery module 100 stack, respectively. Also, most of the space between the front case 210 and the rear case 220 may be configured to be exposed to the top and bottom. That is, in the battery module 100 stack, only a portion of the front and rear ends are covered by the front case 210 and the rear case 220, and most of the upper and lower portions of each battery module 100 may be configured to be exposed to the outside. In other words, a significant portion of each battery module 100 may be exposed to the outside without being covered by the pack case 200. At this time, the space between each battery module 100 may also be exposed to the outside. In particular, the separation space A4 between the battery modules 100 may be formed in a form elongated in the front-rear direction (Y-axis direction) of the battery pack.

According to this implementation configuration of the present disclosure, air may exist in the space between the battery modules 100 to function as a heat insulating layer. Therefore, heat transfer performance between the battery modules 100 may be further improved. Moreover, since the space between the battery modules 100 is exposed to the outside, heated air may be discharged from the space between the battery modules 100 to the outside and cold air from the outside may be introduced into the space between the battery modules 100.

In addition, a heat shielding member or a flame blocking member with insulation properties may be interposed in the separation space A4 between the battery modules 100 of FIG. 11.

In this implementation configuration, the opening O of the pack case 200 located at the front and/or rear side of the battery pack may be configured to communicate with the separation space between the battery modules 100. That is, when the melting member 300 is removed from the opening O due to venting gas or the like, the opening O may be provided at a position that may be connected to the separation space between the battery modules.

According to this configuration of the present disclosure, due to communication between the insulation space between the battery modules 100 and the opening O, the effect of suppressing heat transfer between the battery modules 100 may be further improved. Moreover, the separation space between the battery modules 100, that is, the insulation space may be connected to not only the upper and lower portions but also the outside through the opening O of the pack case 200. Therefore, the ventilation effect of air in the separation space between the battery modules 100 is increased, and thus heat blocking performance between the battery modules 100 may be further improved.

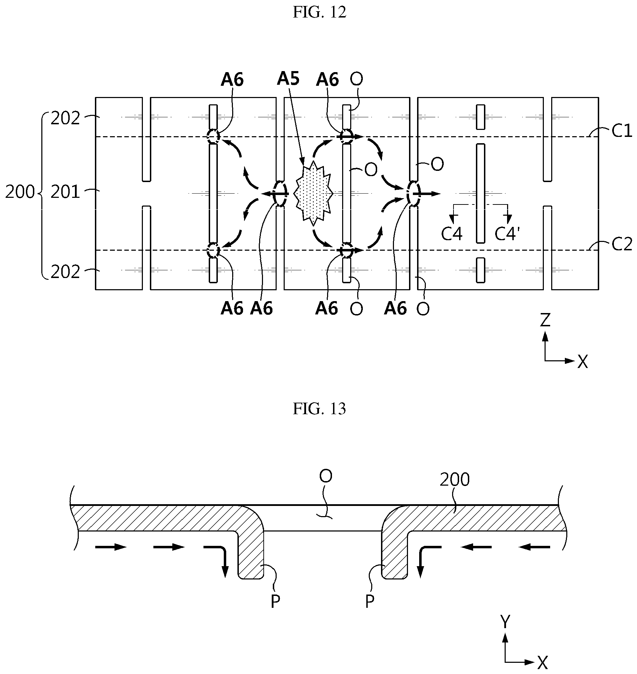

FIG. 12 is a development view schematically illustrating the configuration of a portion of a pack case according to another embodiment of the present disclosure. In particular, FIG. 12 may be regarded as a modified example of the embodiment of FIG. 9. In FIG. 12, the melting member 300 coupled to the opening O of the pack case 200 is omitted. For various embodiments of the present disclosure, including this embodiment, detailed descriptions of parts to which the contents described in other embodiments may be applied identically or similarly will be omitted and differences therebetween will be mainly described.

Referring to FIG. 12, a plurality of openings O may be formed in the pack case 200. In particular, a plurality of openings O may be formed in a horizontal direction (X-axis direction) and also in a vertical direction (Z-axis direction). In this case, the separation spaces between the plurality of openings O disposed in the vertical direction may be alternately disposed in the horizontal direction. That is, in the openings O adjacent to each other in the left-right direction, the portion where the openings O are not formed is the same as the portion indicated by A6. In addition, a plurality of A6 portions (portions between openings, or ends of openings) may be disposed in a horizontal direction, and adjacent A6 portions may not be located at the same position in the vertical direction (Z-axis direction) but may be disposed in a zigzag pattern to be located at different positions. In other words, A6 portions adjacent to each other in the horizontal direction may be disposed at different heights in the vertical direction.

According to this implementation configuration of the present disclosure, heat conduction through the pack case 200 may be more effectively suppressed by the opening O. For example, when a thermal event occurs in a portion indicated by A5 in FIG. 12, heat may be transferred in left and right directions through the pack case 200. Here, when the melting member 300 is removed and the opening O of the pack case 200 is opened, heat may be mainly conducted to the portion indicated by A6. At this time, since the adjacent A6 portions are located at different heights, heat may not move in a straight line in the X-axis direction but may move in a curved shape as indicated by arrows. Accordingly, since the horizontal movement path of heat through the pack case 200 is lengthened, the transfer amount and transfer speed of heat may be reduced. Therefore, the problem of heat transfer through the pack case 200 between the battery modules 100 disposed in the horizontal direction may be more effectively suppressed.

FIG. 13 is a cross-sectional view schematically illustrating some configurations of a pack case according to still another embodiment of the present disclosure. For example, FIG. 13 is a modified example of the cross-sectional configuration taken along the line C4-C4' of FIG. 12, and it can be said to show a configuration in a state where the melting member 300 is removed. In particular, FIG. 13 may be referred to as an embodiment of a drawing with a shape viewed from above for the horizontal cross-sectional configuration of the rear case 220, as shown in FIG. 8,

Referring to FIG. 13, an opening O may be formed in the pack case 200, and a protrusion as indicated by P may be formed around the opening O. The protrusion P may be formed to protrude from the inner surface of the pack case 200, that is, the side surface facing the battery module 100, in an inward direction where the battery module 100 is located. In this case, the protrusion P may be configured in various ways, such as a form in which a portion of the pack case 200 is bent, a form in which a separate component is attached to the pack case 200, or the like.

According to this implementation configuration of the present disclosure, even if the venting gas is continuously discharged from the battery module 100 in a state where the melting member 300 is melted and the opening O is open, leakage of the venting gas to the outside of the pack case 200 through the opening O may be reduced. That is, the venting gas discharged from the battery module 100 may flow along the inner surface of the pack case 200. At this time, even if the opening O is open, the flow direction of the venting gas may be bent toward the inside around the opening O by the protrusion P formed around the opening O, as indicated by arrows in FIG. 13. Accordingly, the possibility that the venting gas is discharged to the outside through the opening O may be lowered. Therefore, in this case, even in a state where the melting member 300 is removed, the venting gas guide function of the pack case 200 may be maintained at a certain level or higher.

In addition, according to this implementation configuration, the melting member 300 may be easily coupled through the protrusion P. For example, the melting member 300 may be coupled to the opening O of the pack case 200 in a form in which a portion of the melting member 300 is inserted into the protrusion P. Accordingly, coupling between the melting member 300 and the pack case 200 may be improved.

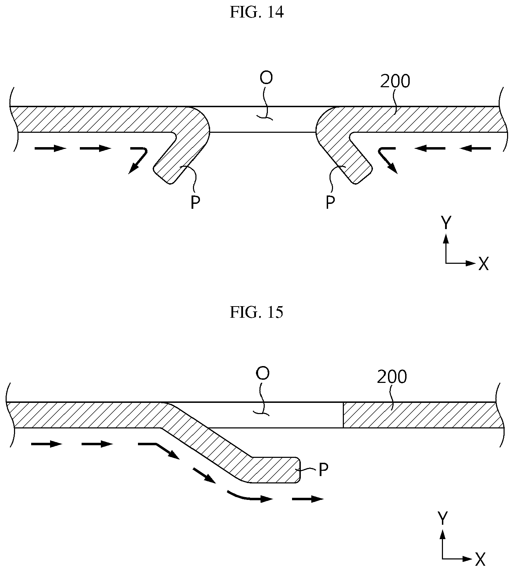

FIG. 14 is a cross-sectional view schematically illustrating some configurations of a pack case according to still another embodiment of the present disclosure. In particular, FIG. 14 may be regarded as another modified example of the configuration of FIG. 13.

In the previous embodiment of FIG. 13, the protrusion P is configured to protrude in a vertical direction from the inner surface of the pack case 200. However, as in the embodiment of FIG. 14, the protrusion P may be configured to be inclined at a predetermined angle with respect to the inner surface of the pack case 200. In particular, the protrusion P may be configured to be inclined in a direction opposite to the opening O. For example, in the configuration of FIG. 14, the protrusion P located on the left side of the opening O may be formed to be inclined in the left direction (-X-axis direction) as it goes inward (-Y-axis direction). In addition, the protrusion P located on the right side of the opening O may be formed to be inclined in the right direction (+X axis direction) as it goes inward (-Y-axis direction).

According to this implementation configuration of the present disclosure, it is possible to more effectively suppress the venting gas from being discharged to the opening O in a state where the opening O is open. That is, as indicated by arrows in FIG. 14, the venting gas flowing along the inner surface of the pack case 200 may be diverted at an angle greater than 90° near the opening O by the protrusion. Accordingly, the possibility that the venting gas is directed to the opening O may be lowered. Therefore, in this case, venting gas guide performance by the pack case 200 may be further improved.

FIG. 15 is a cross-sectional view schematically illustrating some configurations of a pack case according to still another embodiment of the present disclosure. The configuration of FIG. 15 may be regarded as another modified example of the configuration of FIG. 13.

Referring to the configuration of FIG. 15, the protrusion P may be formed around the opening O on the inner surface of the pack case 200 and may be configured to be inclined in a direction toward the opening as it goes inward. That is, the protrusion P may be configured to cover a portion of the opening O without completely sealing the opening. Moreover, when the pack case 200 performs the function of the duct, the protrusion P may be configured to be inclined in a direction toward the outlet H1 of the pack case 200 as it gets closer to the battery module 100. Furthermore, the protrusion P may be located on the opposite side of the outlet H1 around each opening O. That is, in the case of the embodiment of FIG. 15, it can be said that the outlet H1 is formed at the right end of the pack case 200, and the protrusion P is located at the left end of the opening O1 and configured to be inclined in the right direction as it goes inward.

According to this implementation configuration of the present disclosure, even in a state where the melting member 300 is removed from the opening O, leakage of the venting gas to the opening O may be suppressed as much as possible, and the venting gas may be smoothly guided toward the outlet H1. Therefore, even in a state where the melting member 300 is removed, the duct function of the pack case 200 may be well maintained.

The battery pack according to the present disclosure may further include various other components of the battery pack known at the time of filing of this application. For example, the battery pack according to the present disclosure may further include components such as a battery management system (BMS), a current sensor, a fuse, and the like.

An energy storage system according to the present disclosure may include at least one battery pack according to the present disclosure. In particular, the energy storage system may include a plurality of battery packs according to the present disclosure electrically connected to each other in order to have a large energy capacity. In addition, the energy storage system according to the present disclosure may further include various other components of the energy storage system known at the time of filing of this application. Moreover, the energy storage system may be used in various places or devices, such as a smart grid system, an electric charging station, or the like.

In addition, a vehicle according to the present disclosure may include one or more battery packs according to the present disclosure. Also, the vehicle according to the present disclosure may further include other various components included in a vehicle, in addition to the battery pack. For example, the vehicle according to the present disclosure may further include a vehicle body, a motor, and a control device such as an electronic control unit (ECU), in addition to the battery pack according to the present disclosure.

Meanwhile, in this specification, terms indicating directions such as upper, lower, left, right, front, and rear may be used, but these terms are just for convenience of explanation, and it is obvious to those skilled in the art that these terms may vary depending on the location of an object or the position of an observer. Also, the terms inner and outer are used in this specification. Unless otherwise specified, for each component, an inner direction means a direction toward the center of the battery pack and an outer direction means the opposite direction.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

### [Reference Signs]

100: battery module
110: battery cell
111: electrode lead
120: module case
121: upper plate, 122: lower plate, 123: side plate
130: bus bar assembly
131: bus bar housing, 132: module bus bar
140: module terminal
200: pack case
201: body portion, 202: bent portion
210: front case, 220: rear case, 230: side case
300: melting member
301: first member, 302: second member
O: opening
O1: first opening, O2: second opening
H1: outlet
H2: fastening hole
P: protrusion

## Claims

1. A battery pack comprising:
a plurality of battery modules each having one or more battery cells, configured to store and release energy, and stacked in at least one direction;
a pack case provided on at least one side of the plurality of battery modules, covering at least a portion of the outside of the plurality of battery modules, and having one or more openings formed therein; and
a melting member provided in the opening of the pack case to seal the opening and configured to open the opening by being melted by heat generated from one or more battery modules among the plurality of battery modules.

2. The battery pack according to claim 1,
wherein the pack case is configured to guide the generated gas when gas is generated from one or more battery modules among the plurality of battery modules, and
the melting member is configured to be melted by the generated gas.

3. The battery pack according to claim 2,
wherein the plurality of battery modules are configured to be disposed side by side in the left-right direction to discharge venting gas forward or backward, and
the pack case is disposed on at least one of the front and rear of the plurality of battery modules.

4. The battery pack according to claim 3,
wherein the pack case comprises a body portion located at the front or rear of the plurality of battery modules and a bent portion formed in a shape in which upper and lower ends of the body portion are bent.

5. The battery pack according to claim 4,
wherein the opening is formed in both the body portion and the bent portion.

6. The battery pack according to claim 1,
wherein the opening is configured to be elongated in a direction orthogonal to the stacking direction of the plurality of battery modules.

7. The battery pack according to claim 1,
wherein the opening is formed so that at least a portion thereof is located between the plurality of battery modules.

8. The battery pack according to claim 1,
wherein the pack case is located on at least one side of the front and rear of the plurality of battery modules, and
the plurality of battery modules are configured such that at least a portion thereof is spaced apart from each other by a predetermined distance and the spaced portion is exposed in at least one direction of upper and lower portions.

9. An energy storage system comprising a battery pack according to any one of claims 1 to 8.

10. A vehicle comprising a battery pack according to any one of claims 1 to 8.
